# EUROPEAN PATENT SPECIFICATION

(11) **EP 0 847 206 B1**
(45) Date of publication and mention of the grant of the patent: **10.04.2002**
(21) Application number: 97830610.8
(22) Date of filing: 17.11.1997
(51) Int. Cl.: H04N 9/31

(54) **Method and apparatus for projecting and moving images**
Verfahren und Vorrichtung zur Projektion und Bewegung von Bildern
Méthode et appareil de projection et de déplacement des images

(30) Priority: 29.11.1996 IT BS960093
(43) Date of publication of application: 10.06.1998
(73) Proprietor: Gi-Zeta di Giuseppe Zacché, 46043 Castiglione d/Stiviere (Mantova) (IT)
(72) Inventor: Zacche, Giuseppe, 46043 Castiglione D/Stiviere (Mantova) (IT)
(74) Representative: Manzoni, Alessandro

(56) References cited:
- EP-A- 0 601 628
- EP-A- 0 601 666
- US-A- 4 722 593
- US-A- 5 379 083

## Description

The present invention concerns the projection of images coming from a computer or other means for choreographic reasons or other.

In particular it refers to a method for projecting and moving simulated images in space which may be in time with music or programmable.

At present there do exist some well known image projectors known as "scanners" which make up and project images through the use of cut-outs cut into different shapes from sheet metal where beams of light having different intensities and varying colours are transmitted through them using dichroic mirrors and /or other optical instruments such as colour changers. The element cut into the shape required is inserted into the projector between an illuminating optics and a focusing optics. The image projected by the projector can then be stored and reflected by a moving mirror.

However, the system has very limited possibilities in projecting images both because of the set shapes of the cut outs and limited movements of the reflecting mirrors.

In other words, present projectors are capable of generating images which are fixed as regards shape, are flat and have a limited area in which they can move. An area limited usually to a wall, screen or some kind of surface.

There are also video projectors capable of projecting simulated images, even three dimensional, which can be connected to electronic signal sources of various types such as satellites, television, etc.

For example, EP 0 601 628 discloses an optical projection apparatus comprising, in this order, a light source, a liquid crystal display panel and a projection lens for projecting an image generated by said panel onto a projection screen. The apparatus includes a first holder for holding the projection lens and having a first optical axis, a second, tubular, holder for holding other components and having a second optical axis, substantially perpendicular to the first optical axis, and a support for the second holder, and where the first holder is rotatable around an axis parallel to the second optical axis. The first holder comprises a reflecting mirror arranged at an angle of substantially 45° with the first and the second optical axis. At least the first holder, or the whole apparatus, is rotatable around an axis parallel to the second optical axis, the rotation being made manually.

Even this projector has a limited capability to move images in space, since it has been realized to make it compact and to facilitate the manual setting of the projection axis inclination. In fact it is only able to project images along a circle arch through the manual rotation of the first holder or of the whole optic apparatus around an axis.

The aim of this invention is to unify the functions of the light projector scanner and the traditional video projector under one single piece of equipment called a Video-scanner, capable of projecting three dimensional images in movement which can either be simulated or not, in colour or in black and white and which can cover a space with angle shots through 360° around the apparatus itself, in any direction.

Another aim of the invention is to propose a projector where the images, which can be simulated or three dimensional, are generated electronically or received by an external transmitter without the need therefore of the traditional cut-outs having fixed shapes with relative colour changers.

A further aim of the invention is to supply a projector which can be used in discotheques, dance halls, television studios and places of amusement with the advantage of being able to project three dimensional images in movement on the walls, ceiling and floor of such premises possibly in time with music or according to a programme so as to improve the overall choreographic aspect of the environment and create different types of atmosphere for those present.

Another aim of the invention is to propose a projector where projection and movement of images are achieved through moving three or more elements in the apparatus together or separately.

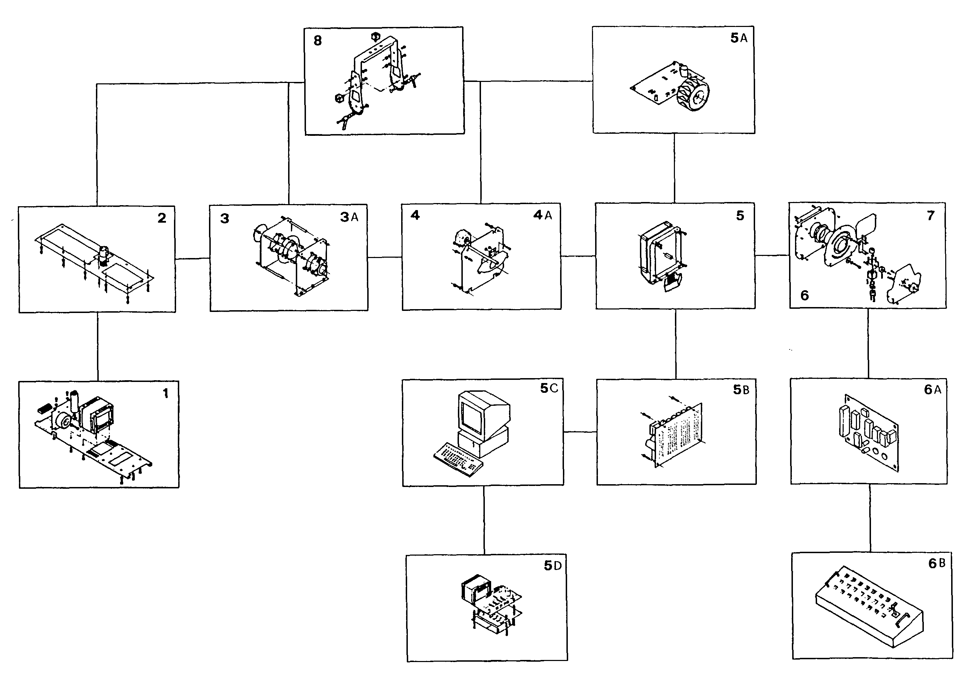

These aims and advantages are achieved by a method of projecting and moving images in space according to claim 1, and an equipment in accordance with claim 3. The enclosed drawing, which is indicative and not limitative, shows a block diagram of the system. Blocks which when assembled form a projector having a different and improved performance compared to that of known video projectors and scanners.

The blocks in said drawing are numbered consecutively and represent in the order:
1. a power factor corrected supply for projection lamp;
2. a lamp and rear parabola;
3. a primary optics for concentrating the source of light with built-in heat proof glass 3A;
4. a "black out" (shutter) with heat shield 4A with heat proof glass
5. motor operated support/supports for one or more panels with either liquid crystal display (LCD) or digital micro mirror devices or other system which transforms and generates images;
6. a secondary focusing-zoom motor operated optics group including at least one Fresnel flat lens and one traditional one;
7. a motor operated moving mirror or mirrors
8. a bracket to support and move the equipment;
5A. forced air cooling system;
5B Electronic control device for LCD displays or digital micro mirror devices or other system which transforms and generates images;
5C. a personal computer;
5D. a TV or SAT video signal
6A. Electronic control device for moving the panels, black-out, zoom, mirrors and support bracket; and
6B. a control panel for transmitting data

Blocks 1 to 7 are assembled inside the body of a projector which is fixed or even better, movable when supported by bracket 8.

More in detail, the power factor corrected supply 1 is powered electrically and is connected to lamp 2 to switch it on. This lamp, due to the effect of an electric discharge from the supply and by means of the rear parabola projects a luminous beam towards the primary optics group 3 which, thanks to its lenses, focuses and condenses the light into a single luminous beam which is of a suitable and controlled size. The heat generated by lamp 2 is partially absorbed by the heat proof filter 3/A and reduced by the cooler fan.

The black-out is made up of a steel panel, which can be moved by an electric motor, and which, when required, is used to intercept the luminous beam coming from the primary optics 3 sent directly or by reflection to the motor operated bracket or brackets containing the system which transforms or generates images 5, after having crossed the forced cooled air shield containing the secondary heat proof glass 4A.

This system 5, connected to the digital or non digital signals coming either from computer 5C, satellite or video, SAT/T.V. 5D, and operated by the electronic control device 5B, generates simulated images which can be three dimensional or not, black and white, monochromatic, coloured, static or moving. When System 5, made up either of liquid crystal panels, digital micro mirror devices or some other system for transforming and generating images, is traversed by a direct or reflected beam of light with black-out not operating, it projects the images towards the motor operated secondary focusing optics 6 and towards the motor operated mirror or mirrors 7. The system, using the motor operated bracket or brackets which support it, transforms and generates images 5, rotates and/or rocks enabling it to project images with the help of the movement of the lenses in the secondary optics group, which are the least oblique and as much in focus as possible. The motor operated support 5 is equipped with a forced air cooling system 5A.

The motor operated secondary optics group 6 increases or decreases the sizes of the images produced by system 5, maintains the shape of the same using a flat Fresnel lens and, by combining the use of the traditional and Fresnel lenses, maximum focusing capacity is achieved. Worthy of note in fact is that the secondary optics group can house at least two movable lenses which can be moved independently or together. The images passing through the secondary optics group are therefore transmitted to the motor operated mirror or mirrors 7 which project them, by reflection, in all directions when in continual movement or when stationary. These movements can be combined with those of the projector as a whole. The projector, which in fact houses various function groups, can be supported and moved by bracket 8, which is motor operated in order to be able to carry out movements, also combined, along the horizontal and vertical planes of the group.

Therefore, the images simulated by the projector are produced by system 5 which is housed and is mobile within the projector and, thanks to both the mobile mirrors and/or lenses of the secondary optics group and/or movements of the equipment as a whole they may be moved in all directions and through 360° all around the equipment with a diffusion and results impossible to produce using the normal projectors referred to in the summary.

Furthermore, the projector equipped in this way can be combined with other identical projectors using a group which sends control impulses to them all so that they can function together if required.

Finally, in a system where provision is made for the use of one or more panels 5 and one or more reflecting mirrors 7, several optics groups 6 can be envisaged. In this way one or more different images can be projected and moved around the equipment itself at angles of over 360° using one or several outputs at the same or at different times.

## Claims

1. Equipment for projecting and moving images in space comprising, inside an equipment housing, an electric power supply for a projection lamp (1, 2); a primary optics group (3) for receiving and directing the light coming from said projection lamp towards a system (5) for transforming and generating images, this system being connected to a digital or non digital signal coming from different sources governed by an electronic control device; a secondary optics group (6) with at least two focusing and zooming lenses for the images coming from said system (5); and one or more image reflecting mirrors (7) placed at the exit of said secondary optics group, and where the equipment housing is . movably supported by a bracket (8), **characterised by** motor means to drive and move said system (5) for transforming and generang images independently or in combination with at least one of the lenses of said secondary optics group (6) and/or at least one of said reflecting mirrors (7) and/or the equipment housing on said bracket (8) so as to move the projected images in space at angles of 360° or more around the equipment in all directions.

2. Equipment for projecting and moving images in space as claimed in claim 1, wherein said system (5) for transforming and generating images includes either one or more liquid crystal display panels or micro mirrors supported by electronically controlled motor operated brackets capable of rotating and/or rocking.

3. Equipment as claimed in claim 2, wherein said system (5) for transforming and generating images is equipped with a cooling system.

4. Equipment as claimed in claim 1, wherein the secondary optics group includes a flat Fresnel lens and at least one traditional lens and wherein at least one of said lenses is motor operated and controlled electronically.

5. Equipment according to claim 1, wherein said system (5) for transforming and generating images, at least one of the lenses in the secondary optics group (6) and at least one reflecting mirror (7) are movable in combination.

6. Equipment according to claim 1, wherein said system (5) for transforming and generating images, at least one of the lenses in the secondary optics group (6), at least one reflecting mirror (7) and the equipment housing (8) are movable in combination.

7. Equipment according to claim 1, wherein said system (5) for transforming and generating images, at least one reflecting mirror (7) and the equipment housing (8) are movable in combination.

8. Method for projecting and moving images in space with the use of the equipment claimed in claim 1, which comprises the step of moving the projected images in space at angles of 360° or more around the equipment in all directions by moving the system (5) for transforming and generating images independently or in combination with at least one of the means selected among the lenses of secondary optics group (6), reflecting mirrors (7) or the housing (8) of the equipment.

9. Method according to claim 8, wherein the movement of the moving components is either continuous or not continuous.

## Patentansprüche

1. Vorrichtung für die Projektion und die Bewegung von Bildern im Raum, die in einem Gehäuse Nachstehendes umfasst: ein elektrisches Netzgerät für eine Projektionslampe (1, 2); eine Hauptoptik (3) für den Empfang und die Fokussierung des aus dieser Lampe kommenden Lichts zu einem System (5) für die Umwandlung und Erzeugung von Bildern, das an einer Quelle von Digitalsignalen und nicht verschiedenen Ursprungs angeschlossen ist, die über eine elektronische Steuervorrichtung gesteuert werden; eine Hilfsoptik (6) mit mindestens zwei Brennund Zoomlinsen für die Bilder dieses Systems (5); und ein oder mehrere Reflexionsspiegel (7) für die Rückstrahlung der Bilder am Ausgang dieser Hilfsoptik, wobei das Gehäuse dieser Vorrichtung auf einer Auflage (8) beweglich positioniert ist, die durch Steuerungs- und Bewegungsvorrichtungen desselben Systems (5) für die kombinierte und getrennte Umwandlung und Erzeugung von Bildern mit mindestens einer der Linsen der Hilfsoptik (6) und/oder mindestens einem der zuvor genannten Reflexionsspiegel (7) und/oder dem Gehäuse der Vorrichtung auf der genannten Auflage (8) **gekennzeichnet** ist, so dass die projizierten Bilder in allen Richtungen des Raums, auf Winkeln von über 360° um die Vorrichtung selbst gerichtet werden können.

2. Vorrichtung für die Projektion und Bewegung von Bildern im Raum nach Anspruch 1, **dadurch gekennzeichnet, dass** dieses System (5) für die Umwandlung und Erzeugung von Bildern eine oder mehrere Tafeln mit LCD-Anzeige oder auch eine Spiegeloptik auf dreh- und/oder schwenkbare Auflagen umfasst, die durch einen elektronisch gesteuerten Motor betätigt werden.

3. Vorrichtung nach Anspruch 2, **dadurch gekennzeichnet, dass** das System (5) für die Umwandlung und Erzeugung von Bildern mit einem Kühlsystem ausgerüstet ist.

4. Vorrichtung nach Anspruch 1, **dadurch gekennzeichnet, dass** die Hilfsoptik eine fresnelsche Planlinse und mindestens eine konventionelle Linse enthält, wobei mindestens eine davon durch den Motor betätigt und elektronisch gesteuert ist.

5. Vorrichtung nach Anspruch 1, **dadurch gekennzeichnet, dass** sich im System (5) für die Umwandlung und Erzeugung von Bildern mindestens eine der Linsen der Hilfsoptik (6) und mindestens ein Reflexionsspiegel (7) kombiniert bewegen.

6. Vorrichtung nach Anspruch 1, **dadurch gekennzeichnet, dass** sich im System (5) für die Umwandlung und Erzeugung von Bildern mindestens eine der Linsen der Hilfsoptik (6), mindestens ein Reflexionsspiegel (7) und das Gehäuse der Vorrichtung (8) kombiniert bewegen.

7. Vorrichtung nach Anspruch 1, **dadurch gekennzeichnet, dass** sich im System (5) für die Umwandlung und Erzeugung von Bildern mindestens ein Reflexionsspiegel (7) und das Gehäuse der Vorrichtung (8) kombiniert bewegen.

8. Methode für die Projektion und die Bewegung von Bildern im Raum durch eine Vorrichtung nach Anspruch 1, die die Bewegungsphase des Systems (5) für die Umwandlung und Erzeugung von Bildern unabhängig oder in Kombination mit mindestens einem der unter den Linsen der Hilfsoptik (6), den Reflexionsspiegeln (7) oder dem Gehäuse (8) der Vorrichtung auswählbaren Elemente vorsieht. Die Bilder können auf diese Weise in allen Richtungen um 360° oder mehr geneigt um die Vorrichtung projiziert werden.

9. Methode nach Anspruch 8, **dadurch gekennzeichnet, dass** die Bewegung der beweglichen Teile sowohl kontinuierlich als auch nicht kontinuierlich ist.

## Revendications

1. Appareil pour projeter et animer des images dans l'espace comprenant, à l'intérieur d'un boîtier: un alimentateur électrique pour une lampe de projection (1, 2); un groupe d'optique primaire (3) de réception et de focalisation de la lumière provenant de ladite lampe de projection vers un système (5) pour transformer et produire des images, relié à une source de signaux - numériques et autres - de différentes provenances contrôlés par un dispositif de commande électronique; un groupe d'optique secondaire (6) avec au moins deux lentilles de mise au point et zoom pour les images provenant dudit système (5); et un ou plusieurs miroirs (7) de réflexion des images à la sortie du groupe d'optique secondaire; le boîtier de l'appareil est soutenu pour un support mobile (8). L'appareillage est **caractérisé par** des dispositifs de commande et d'actionnement du système (5) permettant de transformer et produire les images de façon disjointe et combinée au moyen au moins d'une des lentilles du groupe d'optique secondaire (6) et/ou au moins d'un des miroirs de réflexion (7) et/ou du boîtier de l'appareil sur le support (8) de façon à faire bouger les images projetées dans toutes les directions dans l'espace sur des angles de plus de 360° autour de l'appareil.

2. Appareil pour projeter et animer des images dans l'espace selon la revendication 1, où le système (5) pour transformer et produire les images comprend soit un ou plusieurs panneaux dotés d'affichage à cristaux liquides, soit une optique à miroir soutenue par des supports actionnés par un moteur à commande électronique capable de tourner et/ou d'osciller.

3. Appareil selon la revendication 2 où le système (5) pour transformer et produire les images est muni d'un dispositif de refroidissement.

4. Appareil selon la revendication 1 où le groupe d'optique secondaire comprend une lentille plate de Fresnel et au moins une lentille traditionnelle et ou au moins une desdites lentilles est actionnée par un moteur et contrôlée par un dispositif de commande électronique.

5. Appareil selon la revendication 1 où le système (5) pour transformer et produire les images, au moins une des lentilles du groupe d'optique secondaire (6) et au moins un miroir réfléchissant (7) se déplacent de façon combinée.

6. Appareil selon la revendication 1 où le système (5) pour transformer et produire les images, au moins une des lentilles du groupe d'optique secondaire (6), au moins un miroir réfléchissant (7) et le boîtier de l'appareil (8) se déplacent de façon combinée.

7. Appareil selon la revendication 1, où le système (5) pour transformer et produire les images, au moins un miroir réfléchissant (7) et le boîtier de l'appareil (8) se déplacent de façon combinée.

8. Méthode pour projeter et animer des images dans l'espace en employant l'appareil objet de la revendication 1 comprenant une étape de mouvement du système (5) pour transformer et produire, de façon indépendante ou combinée avec au moins un des moyens choisis parmi les lentilles du groupe d'optique secondaire (6), les miroirs réfléchissants (7) ou le boîtier (8) de l'appareillage, les images projetées dans l'espace inclinées 360° ou plus autour de l'appareil dans toutes les directions.

9. Méthode selon la revendication 8 où le mouvement des éléments mobiles est aussi bien continu que discontinu.
